# EUROPÄISCHE PATENTSCHRIFT

(11) **EP 0 583 301 B1**
(45) Veröffentlichungstag und Bekanntmachung des Hinweises auf die Patenterteilung: **07.12.1994**
(21) Anmeldenummer: 92909462.1
(22) Anmeldetag: 27.04.1992
(51) Int. Cl.: B60K 6/04, H02K 9/197, H02K 5/20

(54) **ELEKTRISCH ANTREIBBARES KRAFTFAHRZEUG**
ELECTRICALLY DRIVABLE MOTOR VEHICLE
VEHICULE PROPULSE PAR UN MOTEUR ELECTRIQUE

(30) Priorität: 10.05.1991 DE 4115303
(43) Veröffentlichungstag der Anmeldung: 23.02.1994
(73) Patentinhaber: AUDI AG, 85002 Ingolstadt (DE)
(72) Erfinder: GAHLEITNER, Alfred, A-8010 Graz (AT); GEELINK, Andreas, D-8071 Lenting (DE); HEIDL, Roland, D-8071 Lenting (DE)
(74) Vertreter: Le Vrang, Klaus
(86) Internationale Anmeldenummer: EP9200915
(87) Internationale Veröffentlichungsnummer: WO9220545

(56) Entgegenhaltungen:
- EP-A- 0 355 171
- GB-A- 803 388
- US-A- 2 938 131
- Eureka, Bd. 11, Nr. 2, Februar 1991, KENT, GB, Seiten 24-26, "oil cooled electric motors booost hybrid car hopes"
- Patent Abstracts of Japan, Bd. 9, Nr. 280 (E-356). 8. November 1985 & JP-A-60 121 941

## Beschreibung

Die Erfindung bezieht sich auf ein elektrisch antreibbares Kraftfahrzeug.

Elektrofahrzeuge oder Fahrzeuge mit einem sogenannten Hybridantrieb, also sowohl einem Verbrennungsmotor als auch einem Elektromotor, gehören zum Stand der Technik. Einen Überblick über den gegenwärtigen Stand der Technik bietet die Literaturstelle "Gahleitner: Stand der Entwicklung von Elektro-Straßenfahrzeugen 1989, ÖZE, Jahrgang 42, Heft 5, Mai 1989, Seite 979 ff.".

Vor allem in Verbindung mit einer Kardanwelle, die direkt einen Teil des Läufers eines Motors bilden soll, hat sich ein Permanentmagnet-Synchronmotor als vorteilhaft erwiesen, der bei kleiner und kompakter Baueinheit gut in ein Hybridfahrzeug integriert werden kann, dessen Kardanwelle über eine Verbrennungskraftmaschine angetrieben ist.

Aus der Literaturstelle "Eureka, Incorp: Engineering Materials & Design, 11 (1991) February, No. 2, Horton Kirby, Kent, GB" ist ein Elektromotor für Kraftfahrzeuge, insbesondere Hybridfahrzeuge bekannt, der ölgekühlt oder alternativ auch wassergekühlt betrieben wird. Damit wird erreicht, daß keine Temperaturen mehr auftreten, die oberhalb des Curie-Punktes der Permanentmagnete liegen. In dieser Literaturstelle wird die Verwendung von Neodym-Eisen-Bor-Magneten vorgeschlagen, die einen verhältnismäßig niedrigen Curie-Punkt besitzen.

Der dabei vorgesehene Verlauf der Kühlflüssigkeit, unter anderem auch Wasser, ist jedoch verhältnismäßig kompliziert, insbesondere ist die Fertigungstechnik für derartige Motoren problematisch.

Aufgabe der Erfindung ist es, einen gattungsgemäßen Motor zu schaffen, der trotz der entsprechenden Einrichtungen zur Zuführung von Kühlflüssigkeit leicht zu fertigen ist.

Die Aufgabe wird gelöst durch den Hauptanspruch.

Erfindungsgemäß ist vorgesehen, daß als Elektromotor ein Permanentmagnet-Synchronmotor verwendet wird, der sich vor allem dadurch auszeichnet, daß er kurzfristig sehr stark belastet werden kann, er kann für einen begrenzten Zeitraum mit erheblichen Stromstärken gefahren werden und eignet sich so insbesondere bei Straßenfahrzeugen dazu, die Belastung beim Anfahren zu erfüllen. Die Grenzen der Stromaufnahme sind weniger durch den Motor selbst als vielmehr durch die Steuerungselektronik und durch Akkumulator- oder Batteriekapazitäten gegeben. Gerade bei Fahrzeugen, bei denen selten ein stationärer Betrieb vorkommt, wie bei Straßenfahrzeugen, die je nach Verkehrslage abgebremst oder beschleunigt werden müssen, ist die starke Kurzzeitbelastung des Permanentmagnet-Synchronmotors von großem Vorteil.

Mit Hilfe einer Flüssigkeitskühlung, insbesondere Wasserkühlung, kann die stehende Wärme abgeführt werden.

Um hierbei zu einem günstigen Aufbau zu gelangen, ist vorgesehen, daß das Gehäuse für den Motor topfartig ausgebildet ist. Ein entsprechender Deckel schließt das Gehäuse ab, und dieser Deckel ist im Bereich der Auflagefläche an der Stirnseite der Seitenwände mit Öffnungen versehen, durch die die Anschlüsse für die Wasserkanäle hindurchgeführt sind.

Damit sind keine Dichtungsstellen zwischen Deckel und Gehäuse mehr notwendig.

Durch die kopfseitige Zufuhr der Kühlwasserkanäle ist eine Einbaulage des Motors kurz vor dem Hinterachsdifferential möglich, dadurch wird sichergestellt, daß die Kabelverbindungen zwischen den im rückwärtigen Gepäckraum untergebrachten Batterien und dem Motor extrem kurz gehalten werden können.

Die Verwendung des Permanentmagnet-Synchronmotors ermöglicht die optimale Nutzung des zur Verfügung stehenden Bauraumes, zumal die Kardanwelle - die ohnehin vorhanden ist - in den Motor funktional integriert wird.

Kleinbauende Motoren wie der Permanentmagnet-Synchronmotor haben ein geringes mechanisches Trägheitsmoment, was den Fahrleistungen insbesondere bei Schaltvorgängen zugute kommt.

Weiterbildungen der Erfindung sind in den Unteransprüchen beschrieben.

Gemäß einem besonderen Merkmal ist zusätzlich zur Wasserkühlung noch eine Luftkühlung durch die Durchströmung des Gehäuses vorgesehen, wobei das Umlaufen des Läufers für eine gewisse Zirkulation sorgt. Erfindungsgemäß jedoch wird die Luft nicht mit der Umgebungsluft ausgetauscht, sondern es findet ein geschlossener Luftstrom statt, die in dem Gehäuseinnern umgewälzte Luft wird durch einen Wärmetauscher geführt und dort wieder abgekühlt. Auf diese Weise wird vermieden, daß mit Metallstaub und ähnlichem angereicherte Luft zur Kühlung angesaugt wird, dieser z. T. ferromagnetische Elemente enthaltende Metallstaub würde sich auf den Permanentmagneten niederschlagen und nach kurzer Zeit den Motor stilllegen.

Im folgenden wird die Erfindung anhand der Figur im Detail beschrieben. Es zeigen:

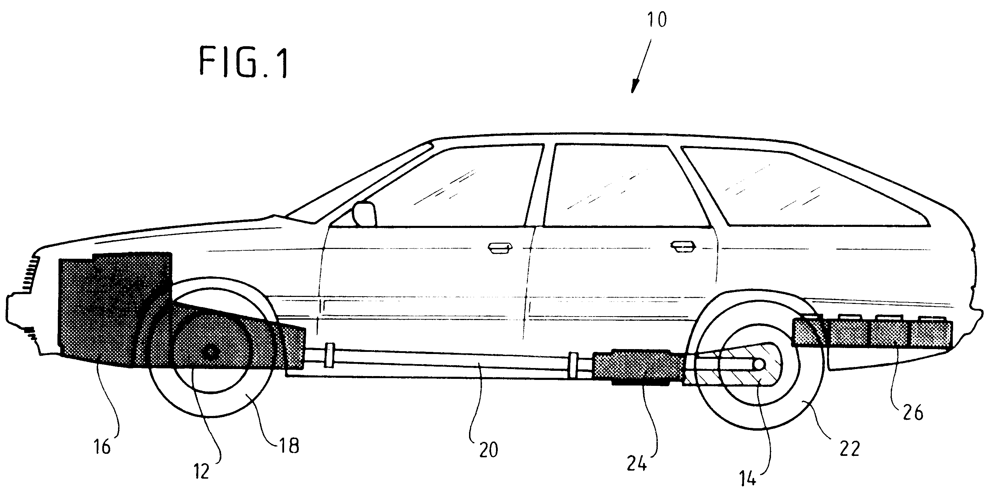

- Fig. 1: eine Seitenansicht des erfindungsgemäßen Kraftfahrzeuges zur Darstellung der Einbaulage;
- Fig. 2: eine teilweise geschnittene Seitenansicht des Elektromotors; und

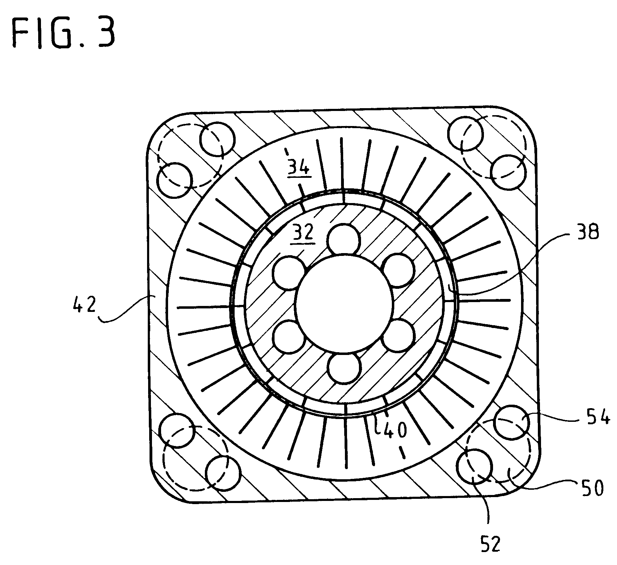

- Fig. 3: eine geschnittene Aufsicht auf den Elektromotor.

Mit dem Bezugszeichen 10 ist ein Hybridfahrzeug dargestellt, das im Bereich der Vorderräder 18 eine Brennkraftmaschine 16 sowie ein daran anschließendes Getriebe 12 aufweist. Am Getriebeausgang befindet sich ein Zwischendifferential, von dem zum einen eine Antriebswelle auf die Vorderräder 18 wirkt, sowie über eine Kardanwelle 20 und ein Hinterachsdifferential 14 die Hinterräder 22 angetrieben werden.

Zusätzlich ist ein Elektromotor 24 vorgesehen, der über einen Batteriesatz 26 mit Elektrizität versorgt wird und die Kardanwelle antreiben kann.

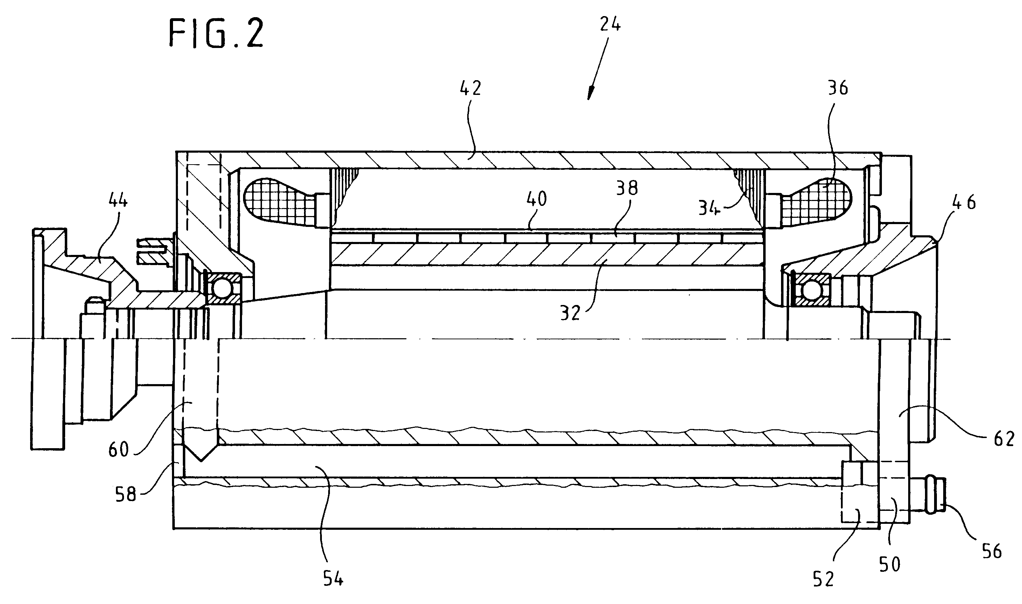

Der Aufbau des Elektromotors ist in Fig. 2 im Detail dargestellt. Der Elektromotor besitzt einen Rotor oder Läufer 32 und einen Ständer oder Stator 34, der Stator 34 ist aus einzelnen Wicklungen mit entsprechenden Wikkelköpfen 36 gebildet.

Der Rotor 32 bildet dabei einen Teil der Kardanwelle 20 und ist durch einen Flansch 44 direkt mit ihr verbunden. Die Außenseite des Rotors 32 ist mit Permanentmagneten 38 beklebt, die zusätzlich bandagiert sind. Zwischen den Permanentmagneten 38 und dem Stator 34 ist ein Luftspalt 40 vorgesehen. Ein Gehäuse 42 umschließt den Aufbau.

Im Bereich 46, dem Ende 44 mit der angeflanschten Kardanwelle 20 gegenüberliegend ist die direkte Verbindung des Elektromotors 24 mit dem Hinterachsdifferential 14 vorgesehen, so daß der Elektromotor einen ersten Abtrieb über die Kardanwelle zu den Vorderrädern und einen zweiten Abtrieb über das Hinterachsdifferential zu den Hinterrädern hat. Damit wird ein permanenter Allradantrieb verwirklicht.

Durch die Auslegung des Motors als Permanentmagnet-Synchronmotor ist eine Umdrehungszahl des Läufers 32 von bis zu 10 000 Umdrehungen pro Minute möglich, so daß auch bei schnellaufenden Fahrzeugen ein ständiges Mitlaufen des Motors 24 möglich ist, ohne daß der Motor beschädigt wird.

Das Gehäuse 24 ist in der Außenform seines radialen Querschnittes etwa quadratisch, so daß der Gehäusemantel in den Ecken des Quadrates verhältnismäßig viel Material stehen hat. In diesem Bereich ist von der Stirnseite her, die in Richtung zum dem Differential weist, eine Bohrung 50 vorgesehen, die an der Stirnseite des topfartigen Gehäuses 24 beginnt und durch die Wandung bis fast zum Boden reicht, der in Richtung der Brennkraftmaschine weist.

Etwas axial versetzt dazu sind vom Boden her zwei Bohrungen 52 und 54 vorgesehen, die fast bis zur Stirnseite reichen. Die Bohrungen 50, 52 und 54 überlappen sich, so daß in dem Innenbereich ein Gesamtkanal gebildet wird, durch den Fluid strömen kann und der aufgrund des Nebeneinanderliegens der Bohrungen 50, 52 und 54 eine verhältnismäßig große Oberfläche besitzt. Die Hinzuführung jedoch zu diesem breiten Kanal der sich aus 50, 52 und 54 zusammensetzt, findet allein durch die kreisförmige Bohrung 50 statt, so daß ein Anschluß von Schläuchen oder ähnlichem sowie die Abdichtung verhältnismäßig einfach ist. Zur weiteren Erleichterung dazu ist ein im Querschnitt kreisförmiger Stutzen 56 vorgesehen.

Die von hinten vorgenommenen Bohrungen 52 und 54 bilden im Boden lediglich zwei kreisrunde Löcher, eines davon ist mit 58 angedeutet, und könnten dementsprechend mit einfachen kreisförmigen Stopfen verschlossen werden.

Durch den Boden ist eine weitere Bohrung 60 vorgesehen, über diese Bohrung 60, von denen mehrere in gleicher Weise angebracht werden können, werden die in den Vierecken des im Außenquerschnitt quadratischen Gehäuses liegenden Bohrungen miteinander verbunden, so daß es zu einem Umlauf von Kühlungsfluid kommen kann.

Der nach Einbau des Motors auf das Gehäuse 24 auf die Stirnseite aufzusetzende Deckel 62 besitzt im Bereich der Stutzen 56 Öffnungen, so daß diese Stutzen durch den Deckel 62 hindurchführen und nicht mehr unterbrochen werden müssen und keine Dichtungsstellen zwischen Deckel und Gehäuse notwendig sind.

In einer bevorzugten Ausführung sind auch die Wickelköpfe 36 nahe der Gehäusewand 42 angeordnet und thermisch leitfähig mit dieser Gehäusewand vergossen, so daß auch die Wickelköpfe als besonders gefährdete Stellen thermisch gekühlt sind und gegen Überhitzung geschützt sind.

Zusätzlich zu der Wasserkühlung kann noch eine Luftkühlung vorgesehen werden, wobei in bevorzugter Weise ein geschlossener Kühlluft-Kreislauf auszubilden ist, die also an geeigneter Stelle durch die Gehäusewand in das Innere eingeblasene Luft wieder abgesaugt wird und in geschlossenem Kreislauf durch einen Wärmetauscher geführt wird. Dadurch ist sichergestellt, daß keine Schmutzteilchen, insbesondere Eisenspäne, von außen über die Kühlluft in das Motorinnere eingeschleppt werden, die sich sonst an den Permanentmagneten ablagern und von dort kaum wieder zu entfernen wären, so daß nach kurzer Zeit der schmale Luftspalt 40 zugesetzt wäre.

## Patentansprüche

1. Elektrisch antreibbares Kraftfahrzeug (10) mit einem Elektromotor (24), der einen zylinderförmigen oder im Querschnitt polygonen Läufer (32) mit auf dem Zylindermantel bzw. Polygonmantel aufgebrachten Permanentmagneten (38) sowie einen entsprechend ausgebildeten Ständer (34) mit Wicklungen aufweist, wobei der Elektromotor (24) in einem mit Wasserkanälen (50, 52, 54) versehenen Gehäuse (42) untergebracht ist, dadurch gekennzeichnet, daß der Elektromotor ein Permanentsynchronmotor (24) ist, daß das Gehäuse topfartig mit Deckel (62) ausgebildet ist, wobei der Deckel (62) im Bereich der Auflagefläche an der Stirnseite der Seitenwände Öffnungen aufweist, durch die die Anschlüsse (56) für die Wasserkanäle (50, 52, 54) hindurchgeführt sind.

2. Elektrisch antreibbares Kraftfahrzeug nach Anspruch 1, dadurch gekennzeichnet, daß die Anschlüsse für die Wasserkanäle (50, 52, 54) als zylindrische Stützen (56) ausgebildet sind.

3. Elektrisch antreibbares Kraftfahrzeug nach einem der Ansprüche 1 und 2, dadurch gekennzeichnet, daß die Wickelköpfe (36) thermisch leitend der Gehäusewand (42) zugeordnet sind.

4. Elektrisch antreibbares Kraftfahrzeug nach einem der Ansprüche 1 bis 3, dadurch gekennzeichnet, daß die Kanäle ausgebildet sind durch mindestens eine Bohrung (50) von der Stirnseite her bis kurz vor der Bodenseite und mindestens eine Bohrung (52, 54) von der Bodenseite her bis kurz vor der Stirnseite, wobei die von der Stirnseite und die von der Bodenseite her vorgesehenen Bohrungen sich überlappen.

5. Elektrisch antreibbares Kraftfahrzeug nach einem der Ansprüche 1 bis 4, dadurch gekennzeichnet, daß zusätzlich eine Luftkühlung durch Luftdurchströmung des Gehäuseinnern vorgesehen ist, wobei ein geschlossener Luftkreislauf ausgebildet ist, der nach Durchströmung des Gehäuseinnern einen Wärmetauscher passiert.

6. Elektrisch antreibbares Kraftfahrzeug nach einem der Ansprüche 1 bis 5, dadurch gekennzeichnet, daß die Leistungselektronik ebenfalls wassergekühlt ist.

7. Elektrisch antreibbares Kraftfahrzeug nach Anspruch 6, dadurch gekennzeichnet, daß die wasserdurchströmten Kühlkanäle für das Elektromotorgehäuse und zur Kühlung der Leistungselektronik in Serie angeordnet sind.

## Claims

1. Motor vehicle (10) capable of being electrically powered, having an electric motor (24) incorporating a rotor (32) which is cylinder-shaped or of polygonal cross-section and has permanent magnets (38) fitted on the casing of the cylinder or polygon, and further incorporating a correspondingly formed stator (34) with windings, the electric motor (24) being accommodated in a housing (42) equipped with water ducts (50, 52, 54),
characterised in that the electric motor is a permanent synchronous motor (24), that the housing is a pot-like construction with a lid (62), and the lid (62) incorporates openings on the end face of the side walls in the region of the supporting surface, through which openings pass the connections (56) for the water ducts (50, 52, 54).

2. Electrically powered motor vehicle according to claim 1, characterised in that the connections for the water ducts (50, 52, 54) are constructed in the form of cylindrical brackets (56).

3. Electrically powered motor vehicle according to either of claims 1 and 2, characterised in that the armature end turns (36) are associated in a thermally conductive manner with the wall (42) of the housing.

4. Electrically powered motor vehicle according to any of claims 1 to 3, characterised in that the ducts are formed by at least one bore (50) running from the end face to shortly before the bottom face and at least one bore (52, 54) running from the bottom face to shortly before the end face, and the bores provided to run from the end face and from the bottom face overlap.

5. Electrically powered motor vehicle according to any of claims 1 to 4, characterised in that there is additionally provided a system of air cooling by means of a throughflow of air through the interior of the housing, forming a closed air circuit which after flowing through the interior of the housing passes through a heat exchanger.

6. Electrically powered motor vehicle according to any of claims 1 to 5, characterised in that the power electronics system is likewise water-cooled.

7. Electrically powered motor vehicle according to claim 6, characterised in that the cooling ducts through which water flows for the electric motor housing and for cooling the power electronics system are arranged in series.

## Revendications

1. Véhicule (10) à propulsion électrique comportant un moteur électrique (24) qui comprend un rotor (32) de forme cylindrique au à section polygonale qui comporte des aimants permanents (38) placés sur le corps cylindrique ou polygonal du rotor, ainsi qu'un stator (34) conformé de manière correspondante et muni d'enroulements, le moteur électrique (24) étant placé dans un carter (42) muni de canaux (50, 52, 54) de circulation d'eau, caractérisé en ce que le moteur électrique est un moteur synchrone (24) à aimants permanents, en ce que le carter est en forme de pot et comporte un couvercle (62), le couvercle (62) présentant, dans la zone de sa surface d'appui sur la face frontale des parois latérales, des ouvertures à travers lesquelles les raccords (56) pour les canaux (50, 52, 54) de circulation d'eau sont introduits.

2. Véhicule à propulsion électrique selon la revendication 1, caractérisé en ce que les raccords pour les canaux (50, 52, 54) de circulation d'eau sont en forme de manchons cylindriques (56).

3. Véhicule à propulsion électrique selon l'une quelconque des revendications 1 et 2, caractérisé en ce que les têtes (36) des enroulements sont associées a la paroi (42) du carter par conduction thermique.

4. Véhicule à propulsion électrique selon l'une quelconque des revendications 1 a 3, caractérisé en ce que les canaux sont réalisés sous la forme d'au moins un perçage (50) allant de la face frontale jusque juste avant la face de fond et d'au moins un perçage (52, 54) allant de la face de fond jusque juste avant la face frontale, les perçages venant de la face frontale et venant de la face de fond étant en chevauchement.

5. Véhicule à propulsion électrique selon l'une quelconque des revendications 1 à 4, caractérisé en ce qu'il est prévu en outre un refroidissement à air au moyen d'une circulation d'air à l'intérieur du carter, un circuit fermé de circulation d'air étant formé et traversant un échangeur de chaleur après la traversée de l'intérieur du carter.

6. Véhicule à propulsion électrique selon l'une quelconque des revendications 1 à 5, caractérisé en ce que l'électronique de puissance est également refroidie par eau.

7. Véhicule a propulsion électrique selon la revendication 6, caractérisé en ce que les canaux de refroidissement dans lesquels circule l'eau pour le refroidissement du carter du moteur électrique et pour le refroidissement de l'électronique de puissance sont disposés en série.
